# EUROPEAN PATENT APPLICATION

(11) **EP 4 838 913 A1**
(43) Date of publication of application: **11.11.2026**
(21) Application number: 25175097.2
(22) Date of filing: 08.05.2025
(51) Int. Cl.: H04W 4/80, H04L 67/12, H04L 67/55, H04M 1/60

(54) **SUPPORT FOR MESSAGING AND NOTIFICATION SYNCHRONISATION FROM USER MOBILE PHONE TO VEHICLE INFOTAINMENT UNIT**

(71) Applicant: Bayerische Motoren Werke Aktiengesellschaft, 80809 München (DE)
(72) Inventor: Han, Jiawei, 81369 München (DE); Banakar, Anveet, 81549 München (DE); Perusic, Andrija, 80992 München (DE)

(57) **Abstract**

Providing a method for displaying messages on a vehicle (60) infotainment unit (50) it is an objective of the present invention to allow thirds party app notification and/or multimedia messages to be displayed on the infotainment unit (50). The objective is achieved by: a) receiving (101), at a user mobile phone (3) a first signal indicating a push notification from a customer device server (2); b) forwarding (102), by an app on the user mobile phone (3), the push notification via a second wireless signal; c) receiving (103), by a notification app (51) of the infotainment unit (50), the push notification; and d) alerting (104) a user of the vehicle (60) about the push notification via audio and/or video of the infotainment unit (50).

## Description

### Technical Field

The invention relates to the field of messaging and notification synchronisation from mobile phone to car infotainment.

### Background

When a customer's mobile phone is wireless connected to the infotainment system in the car via Bluetooth, only incoming calls and SMS can be notified in the car. With the current Bluetooth protocols, the user is not able to get all the notifications (e.g: from 3rd party apps like WhatsApp, reminders, health notifications, etc.,) on the device on the car's infotainment system.

Current Bluetooth protocols support only the synchronisation of the phone calls via Hands Free Phone (HFP) protocol and text messages/SMS via Message Access Protocol (MAP). There are no protocols on the Bluetooth level that can transfer the notifications or support new standards of message synchronisation to the car's infotainment system from the customer's phone.

Many of the notifications that are received on the customer's mobile phone cannot be synchronised to the car's infotainment system due to limited support via Bluetooth protocol. One such example is RCS messaging. Rich Communication Services (RCS) is a new standard for instant messaging/SMS. With a RCS message, the message sender is able to see a typing indicator and message read notification. Also, media (such as voice note, picture) can be transported with ease. If an RCS message is received on a device that is connected to the BMW Infotainment system, then it is falls back to support via Bluetooth and therefore is just shown as a text message on the car's infotainment system. Replying to this message also falls back to SMS, so there is no support from the car's infotainment system to send media, typing indicator and read receipts.

Another example of limitations in the current systems is notifications from any other applications like Reminders, Calendar or 3rd party messaging apps like WhatsApp, Teams, etc. These notifications are not transported via Bluetooth, so the user is not able to view these notifications on the car's infotainment system.

### Summary

The deficiency is solved by a method for displaying messages on a vehicle infotainment unit, the method comprising: a) receiving, at a user mobile phone a first signal indicating a push notification from a customer device server; b) forwarding, by an app on the user mobile phone, the push notification via a second wireless signal; c) receiving, by a notification app of the infotainment unit, the push notification; and d) alerting a user of the vehicle about the push notification via audio and/or video of the infotainment unit.

Advantages include allowing thirds party app notifications and/or multimedia messages to be displayed on the infotainment unit over a wireless connection.

The invention provides a method for interaction between a vehicle computer and a mobile terminal program, aiming to solve the current problem that people, even if in many countries illegal, use e.g. WeChat on their mobile phones while driving, which affects driving safety.

With the implementation of this invention, the RCS messages and other notifications can be transported to the car's infotainment system and provide full functionality via the methods proposed in this application.

The invention aims to improve the interaction between a mobile device and a vehicle's infotainment system by providing a head unit that can connect via Bluetooth/WiFi and exchange digital audio signals.

In one example, forwarding of the push notification from the user mobile phone to the infotainment unit is performed assisted by a wireless Service Discovery and Identification Protocol and sent over Bluetooth or Wi-Fi network to the infotainment unit from the user mobile phone; and/or forwarding includes receiving the second signal from the user mobile phone at a push server external to the vehicle, and sending, by the push server, a third signal indicating the push notification to the infotainment unit.

In one example alerting includes classification of the push notification, and display of information regarding the push notification, depending on the classification, in a notification list of the infotainment unit.

In one example, receiving and forwarding of the push notification performed by the app on the user mobile phone, is performed by a smartphone app, such as myBMW app, running on the user mobile phone.

In one example, the push notification received from the customer device server is indication of a message originating from another customer mobile phone.

In one example, the push notifications indicates notifications from 3rd party apps other than SMS such as WhatsApp, team WeChat, and reminders, such as calendar reminders, and/or health notifications and alerting the user includes alerting the user about the notification; and/or the push notification indicates notification about received Rich Communication Services media, such as a voice note, a picture, or video and alerting includes playing the media on the infotainment unit.

In one example, the method further includes downloading, based on the push notification, and on the user mobile phone or infotainment unit, at least one text message from web addresses and converting the text messages to one or more audio messages; wherein the text message may include emails, SMS messages, instant messages, social network feeds and/or news; wherein the method may further include storing the audio messages as audio files on the user mobile phone and/or playing the audio files on the infotainment unit.

The deficiency may further be overcome by a system comprising a vehicle, a customer device server, and a user mobile phone, the vehicle comprising an infotainment unit comprising a notification app; wherein the system is configured to execute the above stated method.

The deficiency may further be overcome by a computer-readable medium claim comprising instructions, that then executed on a user mobile phone, cause the user mobile phone to: a) receive a first signal indicating a push notification from a customer device server; b) forwarding the push notification via a second wireless signal to an infotainment unit of a vehicle; wherein forwarding of the push notification from the user mobile phone to the infotainment unit is performed assisted by a wireless Service Discovery and Identification Protocol and sent over Bluetooth or WiFi to the infotainment unit from the user mobile phone; and/or wherein forwarding includes sending the second signal from the user mobile phone to a push server external to the vehicle for sending, by the push server via a third signal indicating, the push notification to the infotainment unit.

The invention further allows the graphical user interface of the same application to be displayed on both the car device and the mobile phone simultaneously.

The invention may also include a system and method for hands-free control of mobile devices in vehicles using a direct cable connection.

The invention proposes a method for downloading text messages from web addresses (emails, SMS messages, instant messages, social network feeds and news), converting the text messages to audio messages, and storing them as audio files on a mobile device. The audio can be played on the car's infotainment system.

Further, with connection via a myBMW app (over BT or WiFi) to the car's infotainment system, voice calls can be transferred via WiFi instead of BT, which improves audio/voice quality.

### Detailed description

In the following, embodiments of the invention are described with respect to the figures, wherein:
Fig. 1 schematically depicts a system for messaging and notification synchronisation from user mobile phone to a vehicle infotainment unit according to a first embodiment of the invention.
Fig. 2 schematically depicts a system for messaging and notification synchronisation from user mobile phone to a vehicle infotainment unit according to a second embodiment of the invention.
Figs. 3a and 3b schematically depicts a vehicle according to an embodiment of the invention.
Fig. 4 depicts a flowchart of a method according to the invention.
Fig. 5 depicts a flowchart of a method according to an embodiment of the invention.
Fig. 6 depicts a flowchart of a method according to another embodiment of the invention.

The application provides a solution to transfer notifications to an Infotainment system via two different embodiments:
Embodiment 1. Via a mobile phone app, such as the myBMW app; and
Embodiment 2. Via push notifications using an external push server 40.

For both embodiments, a notification on the user mobile phone is first accessed via an app on a user mobile phone. The app then transports these notifications to the car's infotainment system via one of the 2 methods, ether via an existing connection of myBMW app (over BT and/or WiFi) to the car's infotainment system or using push notifications via a push server 40.

An infotainment app of the vehicle infotainment system is configured to display the notifications and providing the user with an option to interact in response to the notification (e.g: reply to an incoming message with a picture or a voice note, snooze a reminder, etc.).

Implementation of the invention requires the following prerequisites:
1- The user of the user mobile phone must grant access to Messages, Notifications (additionally calendar, reminders, etc., based on the device) for the mobile phone app, such as myBMW installed on their device.
2- The mobile phone app must be configured to transport the above additional data via one of the 2 methods:
   Embodiment 1: The existing SDIP protocol that is already used for the connection between the car and the myBMW app, and that is extended to transport additional data.
   Embodiment 2: The myBMW app posts these messages and notifications to an external push server 40 which then forwards this data to the push notification service which is running on the car's infotainment system.
3- The infotainment app must be configured for fetching the data transported over one of the two methods described above.
4- Optionally, based on the type of notification, the notification is only shown in the notification list 52 (e.g.: "Someone liked your picture on WhatsApp"), or the notification can alternatively, or in addition allow user interaction 1050 (e.g.: Snooze a reminder, Reply to a message).

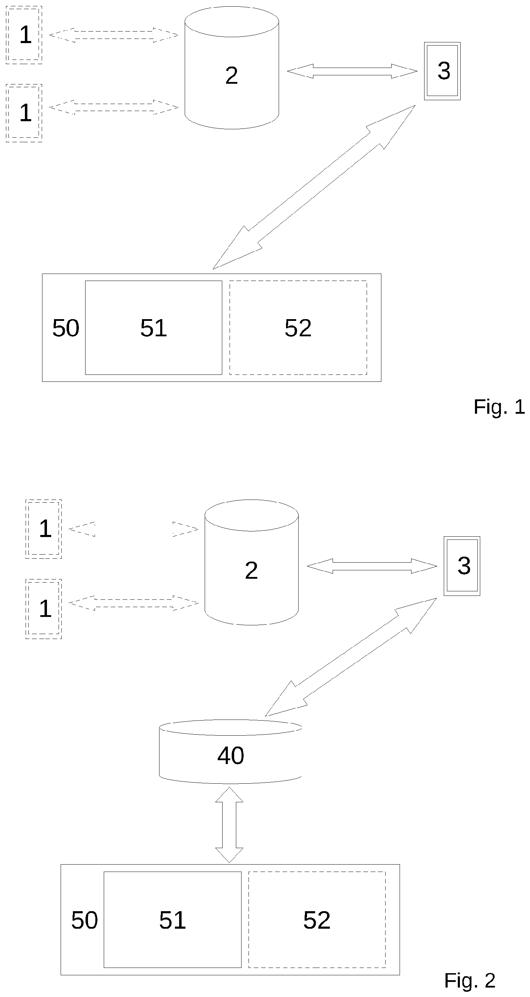

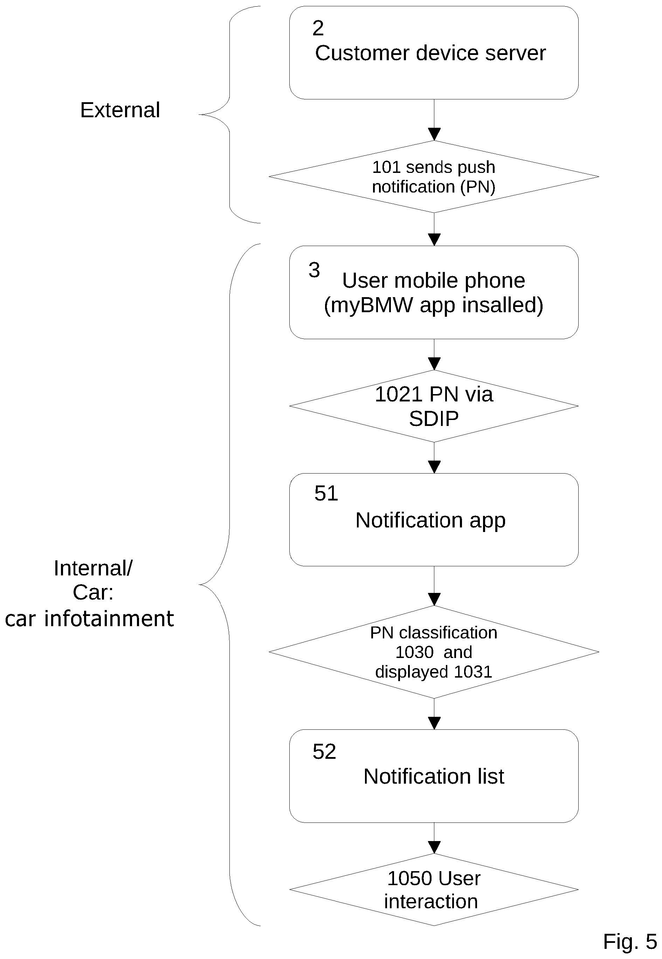

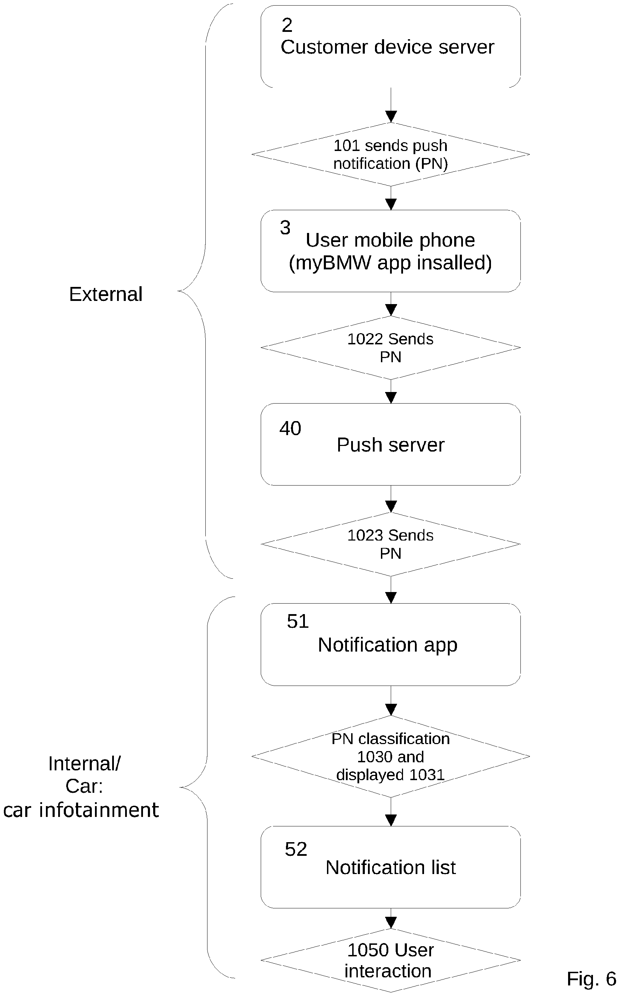

Fig. 1 depicts a system according to the first embodiment of the invention including a user mobile phone 3 (such as a smartphone) in interaction with an infotainment unit 50 of vehicle 60 (such as a car). A message may be received from one or more other customer mobile phones 1, via customer device server 2 to the user mobile phone 3, which forwards the message to the infotainment unit 50, which may be on-board computer of the vehicle. The infotainment unit 50 may contain a notification app 51 which is able to fetch data transported over one of the two methods, i.e. via Service Discovery and Identification Protocol (SDIP) or via the push server 40 from the user mobile phone 3 (see further Figs. 5 and 6, respectively, below).

In case when a push notification (PN) is originating from the user mobile phone 3, the other customer mobile phone 1 is optional.

The SDIP protocol is used in automotive contexts to facilitate seamless communication and connectivity between mobile devices and car interfaces. The protocol helps in identifying and establishing connections between various devices, ensuring that they can communicate effectively. In the context of mobile phone and car-interface connectivity, SDIP plays a crucial role in enabling features such as:
Automatic Pairing: When you bring your mobile phone into the car, SDIP helps the car's system recognize and pair with the phone automatically.
Service Discovery: It allows the car's system to discover the services available on the mobile phone, such as music streaming, navigation, and hands-free calling.
Data Exchange: SDIP ensures that data can be exchanged efficiently between the car and the mobile phone, supporting functionalities like contact sharing, message notifications, and app integration.

The user mobile phone 3 is the main phone potentially connected to the vehicle via e.g. SDIP and which may have a smartphone app (such as myBMW app) installed.

Other customer mobile phones 1, may interact with a customer device server 2. A person may call the user mobile phone 3 using the other customer mobile phones 1 or have an interaction in a social-media platform with the user of the user mobile phone.

Using method 1, the voice data during a phone call can be transferred via WiFi (instead of Bluetooth), thus leading to the usage of higher quality voice codecs and ultimately better voice quality to the customer.

A notification list 52 may be provided wherein, based on the type of notification received at the infotainment unit 50, notification of certain type is only shown in the notification list 52 (e.g: "Someone liked your picture on WhatsApp"), or the notification can be interacted with (e.g: Snooze a reminder, Reply to a message). Messages of other types may be read out loud directly, as an alternative, or in addition to being displayed in the notification list 52.

Fig. 2 depicts a system a system according the second embodiment of the invention. The system is similar to the system of Fig. 1, further including an external push server 40. An app on the user mobile phone 3, may posts messages and notifications to a push server 40 which then forwards this data to a notification app 51 of the infotainment unit 50 of the vehicle as a means of providing messages and notifications to the infotainment unit 50.

A push server 40 is a server that initiates communication with clients to deliver data or notifications in real-time, rather than waiting for the client to request the data. The push server is part of what is known as push technology.

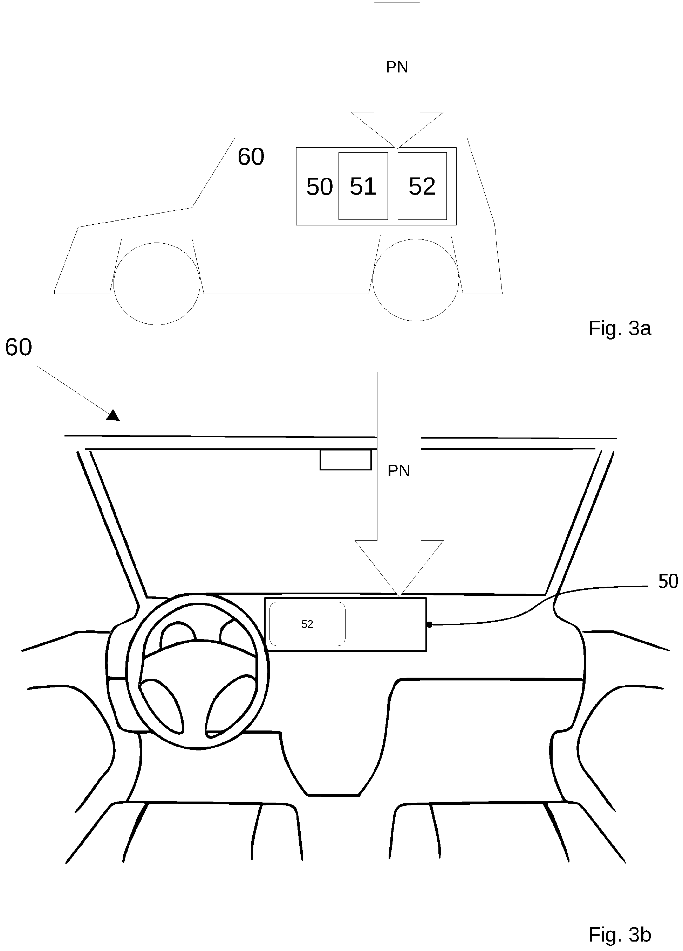

Figs. 3a and 3b depicts a vehicle 60, comprising a infotainment unit 50 with an infotainment notification app 51, and an infotainment notification list 52, implementing the systems of Fig. 1 and/or Fig. 2.

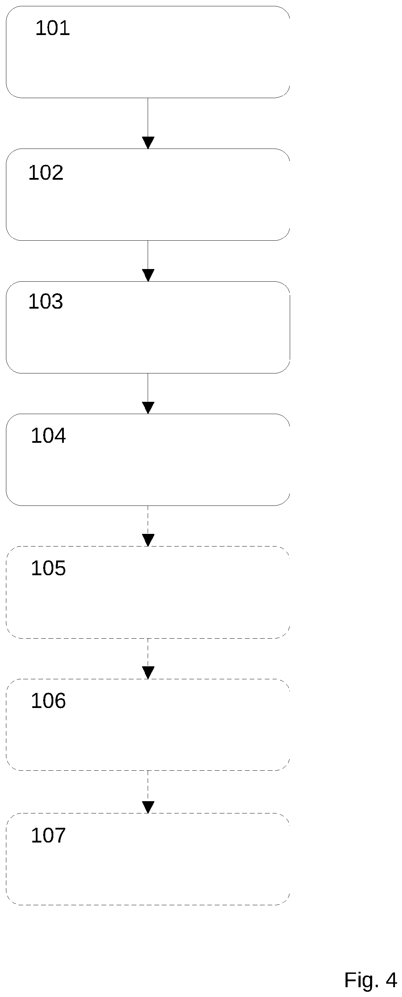

Fig. 4 depicts a method for displaying messages on a vehicle 60 infotainment unit 50, the method comprising:
a) receiving 101, at a user mobile phone 3 a first signal indicating a push notification from a customer device server 2;
b) forwarding 102, by an app on the user mobile phone 3, the push notification via a second wireless signal;
c) receiving 103, by a notification app 51 of the infotainment unit 50, the push notification; and
d) alerting 104, a user of the vehicle about the push notification via audio and/or video of the infotainment unit 50.

Fig. 4 further depicts optional steps (dashed):
downloading 105, based on the push notification, and on the user mobile phone 3 or infotainment unit 50, at least one text message from web addresses and
converting 106 the text messages to one or more audio messages;
wherein the text message may include emails, SMS messages, instant messages, social network feeds and/or news;
wherein the method may further include storing 107 the audio messages as audio files on the mobile device and/or playing the audio files on the infotainment unit 50.

Fig. 5 depicts a method according to an Embodiment of the invention. A customer device server 2 sends a push notification (PN) to a user mobile phone 3, having user phone app, such as myBMW app installed. The user mobile phone 3 sends the push notification to the notification app 51 of the infotainment system via SDIP.

The notification app 51 optionally performs classification (1030) of the PN, and may display (1031) the PN according to the classification in a notification list 52. Finally, the notification app 51 may provide options for the user to optionally interact (1050) with the notification app 51 of the infotainment unit 50, in response to the PN.

Fig. 6 depicts a method according to another Embodiment of the invention. A customer device server 2 sends a push notification (PN) to a user mobile phone 3, having user phone app, such as myBMW app installed. The user mobile phone 3 forwards the push notification to a push server 40. The push server sends the push notification to the notification app 51 of the infotainment system.

The notification app 51 optionally performs classification (1030) of the PN, and may display (1031) the PN according to the classification in a notification list 52. Finally, the notification app 51 may provide options for the user to optionally interact (1050) with the notification app of the infotainment unit 50, in response to the PN.

### Reference numerals

1 Other customer mobile phones
2 Customer device server
3 User mobile phone
40 Push server
50 Infotainment unit
51 Notification app
52 Notification list
60 Vehicle, such as a car
101 receiving, at a user mobile phone a first signal indicating a push notification from a customer device server
102 forwarding, by an app on the user mobile phone, the push notification via a second wireless signal;
103 receiving, by a notification app of the infotainment unit, the push notification
104 alerting a user of the vehicle about the push notification via audio and/or video of the infotainment unit.
105 downloading, based on the push notification, and on the user mobile phone or infotainment unit, at least one text message from web addresses
106 converting the text messages to one or more audio messages;
107 storing the audio messages as audio files on the user mobile phone and/or playing the audio files on the infotainment unit.
1021 send push notification via SDIP
1022 send push notification to push server
1023 forward push notification from push server to infotainment unit
1030 Push notification is classified
1031 Push Notification is displayed
1050 User interaction in response to content of push notification

## Claims

1. A method for displaying messages on a vehicle (60) infotainment unit (50), the method comprising:
a) receiving (101), at a user mobile phone (3) a first signal indicating a push notification from a customer device server (2);
b) forwarding (102), by an app on the user mobile phone (3), the push notification via a second wireless signal;
c) receiving (103), by a notification app (51) of the infotainment unit (50), the push notification; and
d) alerting (104) a user of the vehicle (60) about the push notification via audio and/or video of the infotainment unit (50).

2. The method of claim 1,
wherein forwarding (102) of the push notification from the user mobile phone (3) to the infotainment unit (50) is performed assisted by a wireless Service Discovery and Identification Protocol (1021) and sent over Bluetooth or WiFi to the infotainment unit (50) from the user mobile phone (3); and/or
wherein forwarding (102) includes receiving (1022) the second signal from the user mobile phone (3) at a push server (40) external to the vehicle (60), and sending (1023), by the push server (40), a third signal indicating the push notification to the infotainment unit (50).

3. The method of claim 1 or 2,
wherein alerting (104) includes classification (1030) of the push notification, and display (1031) of information regarding the push notification, depending on the classification, in a notification list (52) of the infotainment unit (50).

4. The method of any of the previous claims,
wherein the receiving (101) and forwarding (102) of the push notification performed by the app on the user mobile phone (3), is performed by a smartphone app, such as myBMW app, running on the user mobile phone (3).

5. The method of any of the previous claims,
wherein the push notification received from the customer device server (2) is indication of a message originating from another customer mobile phone (1).

6. The method of any of the previous claims,
wherein the push notification indicates a notification from a 3rd party apps other than SMS such as WhatsApp, team WeChat, and reminders, such as calendar reminders, and/or health notification and wherein alerting (104) the user includes alerting the user about the notification; and/or
wherein the push notification indicates notification about received Rich Communication Services media, such as a voice note, a picture, or video; and alerting includes playing the media on the infotainment unit (50).

7. The method of any of the previous claim,
further including downloading (105), based on the push notification, and on the user mobile phone (3) or infotainment unit (50), at least one text message from web addresses and converting (106) the text messages to one or more audio messages;
wherein the text message may include emails, SMS messages, instant messages, social network feeds and/or news;
wherein the method may further include storing (107) the audio messages as audio files on the user mobile phone (3) and/or playing the audio files on the infotainment unit (50).

8. A system comprising a vehicle (60), a customer device server (2), and a user mobile phone (3), the vehicle (60) comprising an infotainment unit (50) comprising a notification app (51);
wherein the system is configured to execute the method of any of the previous claims.

9. A computer-readable medium claim comprising instructions, that then executed on a mobile device, in particular a user mobile phone (3), cause the mobile device to:
a) receive (101) a first signal indicating a push notification from a customer device server (2);
b) forwarding (102) the push notification via a second wireless signal to an infotainment unit (50) of a vehicle (60);
wherein forwarding (102) of the push notification from the user mobile phone (3) to the infotainment unit (50) is performed assisted by a wireless Service Discovery and Identification Protocol and sent over Bluetooth or WiFi to the infotainment unit (50) from the user mobile phone (3); and/or
wherein forwarding (102) includes sending the second signal from the user mobile phone (3) to a push server (40) external to the vehicle (60) for sending, by the push server (40) via a third signal indicating, the push notification to the infotainment unit (50).
